# EUROPEAN PATENT SPECIFICATION

(11) **EP 2 463 049 B1**
(45) Date of publication and mention of the grant of the patent: **28.09.2016**
(21) Application number: 11190537.8
(22) Date of filing: 24.11.2011
(51) Int. Cl.: B23D 59/00, B23Q 11/00, B23D 49/16

(54) **Cutting machine**
Schneidemaschine
Découpeuse

(30) Priority: 10.12.2010 JP 2010275945
(43) Date of publication of application: 13.06.2012
(73) Proprietor: Makita Corporation, Anjo, Aichi 446-8502 (JP)
(72) Inventor: Inai, Masahiko, Anjo, Aichi 446-8502 (JP); Hayashi, Masanori, Anjo, Aichi 446-8502 (JP)
(74) Representative: Kramer Barske Schmidtchen Patentanwälte PartG mbB

(56) References cited:
- EP-A1- 1 790 432
- DE-U1- 7 919 565
- JP-U- S6 046 204
- US-A- 2 631 619
- US-A- 3 832 772
- US-A- 4 730 397

## Description

### BACKGROUND OF THE INVENTION

### TECHNICAL FIELD

The present invention relates to a cutting machine in which a reciprocating rod driven by a motor projects downward at a forward portion of a housing that accommodates the motor and a cooling fan for cooling the motor, and a lower end of the rod is connected to a cutting blade to cut a workpiece.

### BACKGROUND OF THE INVENTION

JP S60-46204 U1 discloses a cutting machine according to the preamble of claim 1 and to the preamble of claim 12.

Japanese Patent No. 4248766B discloses a cutting machine which cuts a workpiece with a blade connected to a lower end of a reciprocating rod projecting downward at a forward portion of a housing, so as to prevent the scattering of chips generated from the workpiece being cut by the blade. With the cutting machine, an outlet of a nozzle from which air for cooling a motor blows on a front side of the blade opens rearward so that cooling air gently blows rearward from the front side of the blade. Such cooling air functions as an air curtain that forwardly covers a cutting place of the workpiece. In other words, the cooling air blocks the chips from scattering forwardly.

However, even though the forward scattering of the chips can be suppressed with the cutting machine described above, it is a point of concern that the chips blows up from the cutting place and enters the housing from the projecting section of the rod in the housing.

### SUMMARY OF THE INVENTION

Under the foregoing circumstances, an object is to provide a cutting machine that can prevent the chips from entering a housing from a section where a rod connected to a blade projects from the housing. This object can be achieved by a cutting machine according to claim 1 or 12. Further embodiments are defined by the features of the dependent claims 2-11.

### BRIEF DESCRIPTION OF THE DRAWINGS

FIG. 1 is a drawing that shows an overall perspective view of a jigsaw according to an embodiment with a cover member removed from a housing.
FIG. 2 is a side view of the jigsaw with the cover member removed from the housing.
FIG. 3 is a bottom view of an essential portion of the jigsaw with the cover member removed from the housing.
FIG. 4 is a cross-sectional view of an essential portion of the jigsaw.

### DETAILED DESCRIPTION OF THE EMBODIMENT

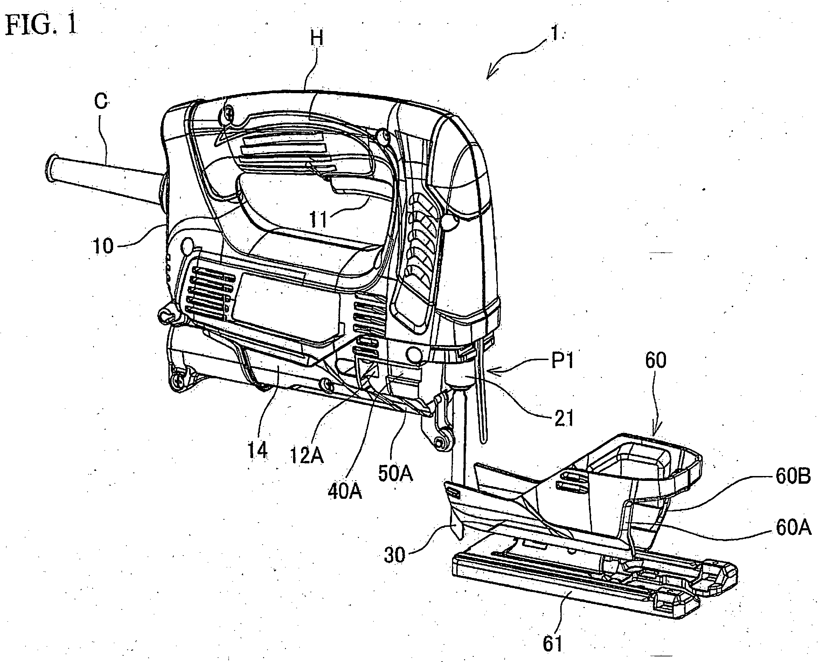

An embodiment will be described with reference to FIGS. 1 to 4. A jigsaw 1 as shown in FIGS. 1 to 4 includes a housing 10, a rod 20, a blade 30, a first blow passage 40 (40A, 40B), a second blow passage 50 (50A, 50B), and a cover member 60. The jigsaw 1 is one example of a cutting machine.

The housing 10 is formed by assembling together left and right half housings made of resin. A handle H is provided on top of the housing 10. The handle H accommodates a switch including a trigger 1 for activating and deactivating the jigsaw 1. A power cord C supplying power to the jigsaw 1 is attached at a rear end of the housing 10 (left side in FIGS. 1 to 4).

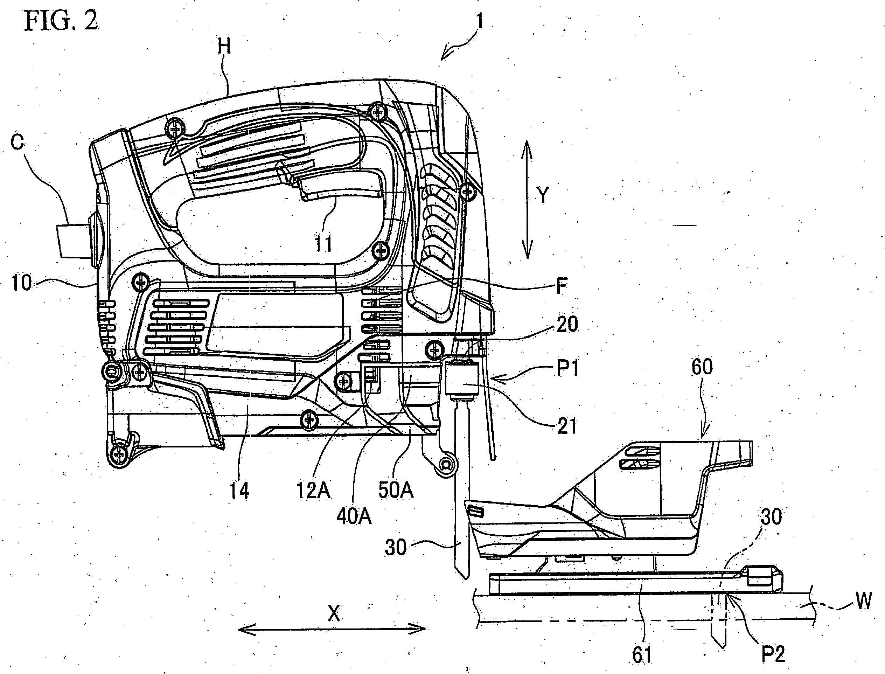

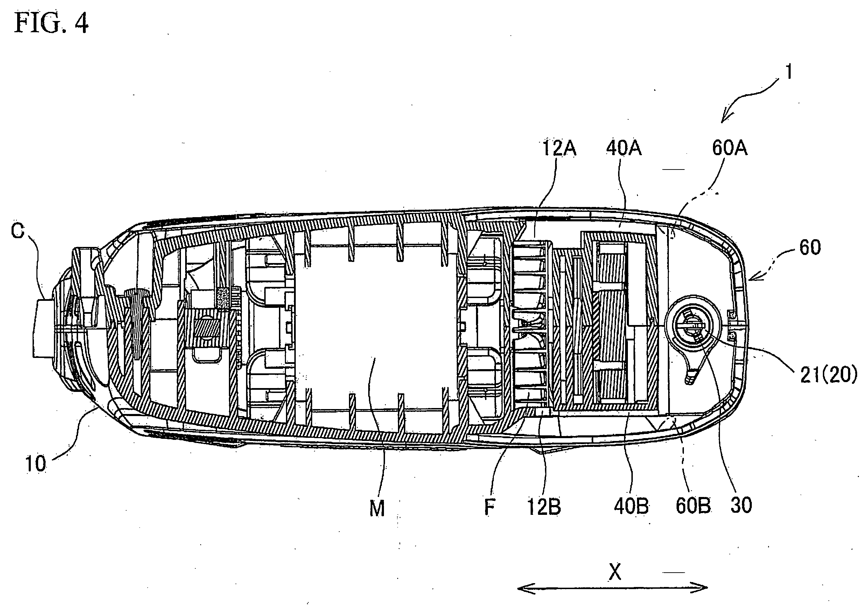

A motor M as a drive power source (see FIG. 4) is accommodated in a center portion of the housing 10, and a reciprocating mechanism (not shown) is accommodated in a forward portion of the housing. An output shaft of the motor M is attached to a fan F for cooling the motor M, and meshes with a drive gear of the reciprocating mechanism. Further, in the forward portion of the housing 10, a rod 20 is reciprocally supported in an up-down direction Y (see FIG. 2) of the housing 10 by the reciprocating mechanism, and a lower end portion of the rod 20 projects downward from the housing 10. The lower end portion of the rod 20 is provided with a blade attachment portion 21, and a base end portion of the linear blade 30 is detachably connected to the blade attachment portion 21. The blade 30 is one example of a cutting blade and the blade attachment portion 21 is one example of a connecting body.

As shown in FIGS. 1, 2, and 4, an air outlet 12A is formed in a left side surface of the housing 10 near a downwind side of the cooling fan F, while an air outlet 12B is formed in a right side surface of the housing 10 near the downwind side. The first blow passage 40A and the second blow passage 50A are formed branching from the air outlet 12A in the left side surface, as shown in FIGS. 1 and 2. Further, the first blow passage 40B and the second blow passage 50B are formed branching from the air outlet 12B in the right side surface. It should be noted that the top side of FIG. 4 corresponds the left side of the housing 10, and the bottom side of FIG. 4 corresponds the right side of the housing 10.

The first blow passage 40A is formed as a recessed groove extending in a front-rear direction X of the housing 10 on the left side surface of the housing 10. An upstream end of the first blow passage 40A communicates with the air outlet 12A, and a downstream end of the first blow passage 40A opens toward a front surface of the housing 10 and extends from a left rear side of the rod 20 toward a top dead center position P1 of the blade attachment portion 21. Meanwhile, the first blow passage 40B is formed as a recessed groove extending in the front-rear direction X on the right side surface of the housing 10. An upstream end of the first blow passage 40B communicates with the air outlet 12B, and a downstream end of the first blow passage 40B opens similar to the first blow passage 40A and extends from a right rear side of the rod 20 toward the top dead center position P1. The first blow passages 40A, 40B are examples of a blow passage according to the present invention.

As shown in FIGS. 1 to 3, the second blow passage 50A is formed as a recessed groove which is inclined forward and extends along the left side surface of the housing 10 toward a cutting place P2 of a workpiece W. An upstream end of the second blow passage 50A communicates with the air outlet 12A, and a downstream end of the second blow passage 50A opens toward a bottom surface of the housing 10 and extends from a left rear side of the blade 30 toward the cutting place P2.

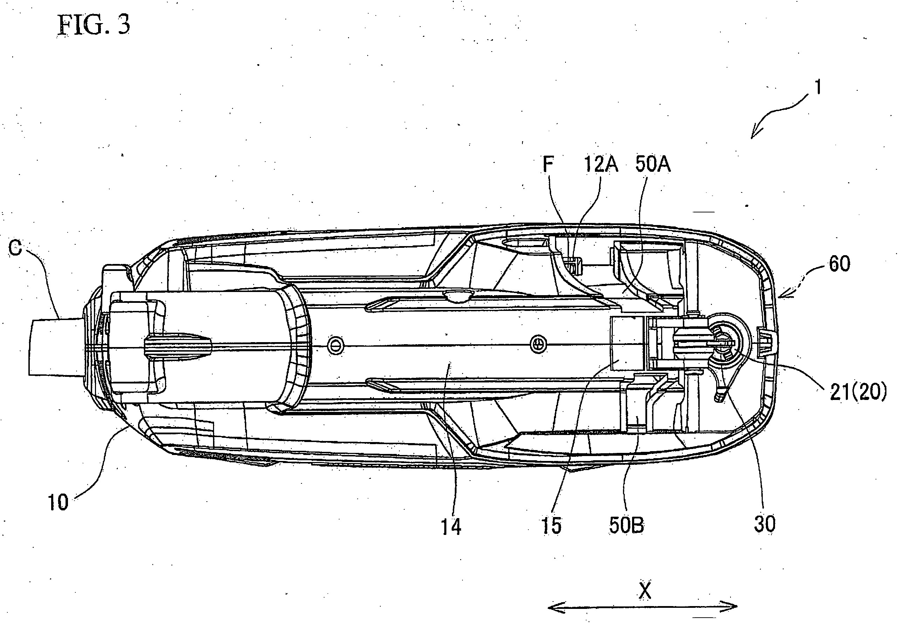

The second blow passage 50B is formed as a recessed groove which is inclined forward and extends along the right side surface of the housing 10 toward the cutting place P2. An upstream end of the second blow passage 50B communicates with the air outlet 12B, and a downstream end of the second blow passage 50B opens similar to the second blow passage 50A and extends from a right rear side of the blade 30 toward the cutting place P2. It should be noted that the top side of FIG. 3 corresponds the left side of the housing 10 and the left side of the blade 30, and the bottom side of FIG. 3 corresponds the right side of the housing 10 and the right side of the blade 30.

In a lower portion of the housing 10, as shown in FIGS. 1 to 3, a hollow dust collection passage 14 is formed extending in the front-rear direction X. A dust collection opening 15 is formed in a front lower surface of the dust collection passage 14. When a dust collector connected to the dust collection passage 14 operates, chips generated in the cutting place P2 are suctioned inside the dust collection passage 14 through the dust collection opening 15.

The cover member 60 is threadably attached to the lower portion of the housing 10. The cover member 60 is made of aluminum and molded into a substantially U-shaped configuration as viewed from the front, as shown in FIGS. 3 and 4. The cover member 60 covers, in a non-contacting manner, the air outlets 12A, 12B, the first blow passages 40A, 40B, the second blow passages 50A, 50B in the lower portion of the housing 10, and the projecting section of the rod 20 at the forward portion of the housing 10. As shown in FIGS. 1 and 4, a front section of the cover member 60 is formed with a left wall portion 60A that is continuous from a left side surface of the cover member 60 and projects diagonally forward and inward of the cover member 60, and a right wall portion 60B that is continuous from a right side surface of the cover member 60 and projects diagonally forward and inward of the cover member 60. After attaching the cover member 60 to the housing 10, outer sides of each of the blow passages 40A, 40B, 50A, 50B are covered by an inner surface of the cover member 60. The left wall portion 60A projects toward the left side of the rod 20, and the right wall portion 60B projects toward the right side of the rod 20 As shown in FIGS. 1 and 2, a base 61 contacting an upper surface of the workpiece W is provided continuous from a lower portion of the cover member 60.

Next, the operation of the jigsaw 1 will be described. By contacting the base 61 with the upper surface of the workpiece W and pressing the trigger 11 toward the inside of the handle H, the switch is set to an ON state and the motor M starts driving. The drive gear of the reciprocating mechanism rotates accordingly, and the rod 20 and the blade 30 reciprocate in the up-down direction Y, thereby cutting the workpiece W along a cut line drawn on the workpiece W In addition, driving of the motor M is accompanied by rotating of the cooling fan F, whereby 4ir for cooling the motor M is suctioned inside the housing 10 through an inlet of the housing 10 and cools the motor M. The cooling air subsequently flows toward the downwind side of the cooling fan F, and such air is then blown from the air outlet 12A and guided toward the first blow passage 40A and the second blow passage 50A. The cooling air is also blown from the air outlet 12B and guided toward the first blow passage 40B and the second blow passage 50B.

The cooling air guided by the second blow passages 50A, 50B flows downward along the inner surface of the cover member 60 through a space between the blow passages 50A, 50B and the inner surface. Then, the cooling air flows toward the cutting place P2 and scatters the chips generated in the cutting place P2. Meanwhile, the cooling air guided by the first blow passage 40A flows along the inner surface of the cover member 60 and then flows from the left side of the rod 20 in a direction intersecting the rod 20 due to the left wall portion 60A. Thus, the cooling air scatters the chips blown upward from the cutting place P2 forward the rod 20. The cooling air guided by the first blow passage 40B similarly flows along the inner surface of the cover member 60 and then flows from the right side of the rod 20 in a direction intersecting the rod 20 due to the right wall portion 60B. Thus, the cooling air scatters the blown-upward chips forward the rod 20. The cooling air flowing in this manner forwardly scatters the chips leftward and rightward the rod 20, which can prevent the chips from heading toward the projecting section of the rod 20. The first blow passages 40A, 40B are an example of a pair of first blow passages according to the present invention.

If the blade 30 is reciprocated in the up-down direction Y to cut the workpiece W with the handle H placed at a bottom and the dust collection passage 14 placed at a top, the chips fall from the cutting place P2 toward the projecting section side of the rod 20 located below. In this case as well, the cooling air which flows leftward and rightward the rod 20 scatters the chips falling from the cutting place P2 forward the rod 20 by the cooling air Therefore, the chips can be prevented from entering the housing 10 from the projecting section.

### Effects of the Embodiment

With the jigsaw 1 of the present embodiment, chips generated from the workpiece W being cut by the blade 30 are scattered forward the rod 20 by the cooling air from the downwind side of the cooling fan F. The cooling air flows in two directions of which one is guided through the air outlet 12A to the first blow passage 40A, and the other is guided through the air outlet 12B to the first blow passage 40B. Therefore, the chips can be prevented from entering the housing 10 from the projecting section of the rod 20 in the housing 10.

When the cooling air guided toward the first blow passages 40A, 40B flows forward and is guided the leftward and rightward the rod 20, the chips are scattered forward from both the left and right sides of the rod 20. Therefore, the chips are blocked from heading toward the projecting section on the housing 10 from the leftward and rightward of the rod 20, so that the chips can be effectively prevented from entering the housing 10 from the projecting section.

The chips generated in the cutting place P2 are scattered by the cooling air from the downwind side of the cooling fan F. The cooling air is guided through the air outlet 12A to the second blow passage 50A and through the air outlet 12B to the second blow passage 50B. Therefore, a user can keep sight of a cut line drawn on the workpiece and an edge of the cutting blade when the cutting blade cuts the workpiece. As a result, better visibility of the blade edge and the cut line (cutting position) can be achieved, which increases in the efficiency of the cutting operation.

In addition, the first blow passage 40A and the second blow passage 50A are formed branching from the air outlet 12A formed near the downwind side of the cooling fan F. Therefore, the blow passages 40A, 50A can be provided in a narrower space compared to when the first blow passage 40A and the second blow passage 50A are formed separately. Thus, the blow passages 40A, 50A can be formed in a practical and compact manner.

The first blow passage 40B and the second blow passage 50B are also formed branching from the air outlet 12B formed near the downwind side. Therefore, the blow passages 40B, 50B can be formed in a practical and compact manner similar to the blow passages 40A, 50A.

The cooling air guided toward the first blow passages 40A, 40B flows between an outer surface of the housing 10 and the inner surface of the cover member 60 along the inner surface, and is guided toward the rod 20. Meanwhile, the cooling air guided toward the second blow passages 50A, 50B flows downward between the outer surface of the housing 10 and the inner surface of the cover member 60, and is guided toward the cutting place P2. Therefore, the cooling air can be reliably guided toward the rod 20 and the cutting place P2 without being affected by the flow of air around the jigsaw 1.

The present invention is not limited to the embodiment described above, and a configuration thereof may be partially modified as appropriate and practiced without departing from the scope of the invention as defined by the claims. The first blow passages 40A, 40B are formed on the left and right side surfaces of the housing 10 in the embodiment described above. The first blow passage not according to the invention may be formed inside the housing 10 as communicating with the downwind side of the cooling fan F, and the downstream end of the first blow passage may open directly behind the rod 20 and blow the cooling air such that the cooling air flows forwardly in a direction perpendicular to the rod 20. Alternatively, not according to the invention two or more first blow passages may be formed inside the housing 10 as communicating with the downwind side of the cooling fan F, and the downstream ends of the first blow passages may open toward the rod 20.

In addition, the second blow passages 50A, 50B are formed on the left and right side surfaces of the housing 10 in the embodiment described above. The second blow passage not according to the invention may be formed inside the housing 10 as communicating with the downwind side of the cooling fan F, and the downstream end of the second blow passage may open in the bottom surface of the housing 10 toward the cutting place P2. If the first blow passage is also formed inside the housing 10 as described above, the second blow passage may be formed branching with the first blow passage from the downwind side of the cooling fan F inside the housing 10.

Moreover, in the embodiment described above, the first blow passage 40A (40B) and the second blow passage 50A (50B) are each formed branching from the air outlet 12A (12B). However, the present invention is not limited to this example. As another example, one first blow passage and two or more second blow passages may be formed branching from the respective air outlets 12A, 12B.

## Claims

1. A cutting machine (1), in which a reciprocating rod (20) is driven by a motor (M) and projects downward at a forward portion of a housing (10) that accommodates the motor (M) and a cooling fan (F) for cooling the motor (M), and a lower end of the rod (20) is connected to a cutting blade (30) for cutting a workpiece (W), the cutting machine (1), wherein
the housing (10) is formed with a first blow passage (40) and cooling air generated by the cooling fan (F) forwardly flows through the first blow passage in a direction intersecting the rod (20) from a rear side relative to the rod (20), and
a second blow passage (50A, 50B) is provided and the cooling air flows through the second blow passage (50A, 50B) toward a cutting region (P2) of the workpiece (W) being cut by the cutting blade (30),
**characterized in that**
the cutting machine (1) further comprises a cover member (60) that is attached to a lower portion of the housing (10), and covers from the first blow passage (40A, 40B) and the second blow passage (50A, 50B) to the forward portion of the housing (10), wherein
between an outer surface of the housing (10) and an inner surface of the cover member (60), the cooling air blown from the first blow passage (40A, 40B) is guided toward the rod (20) and the cooling air blown from the second blow passage (50A, 50B) is guided toward the cutting region (P2).

2. The cutting machine (1) according to claim 1, wherein
a pair of the first blow passages (40A, 40B) is provided in the housing (10) and the cooling air flows through the first blow passages (40A, 40B) leftward and rightward from the rear side of the rod (20).

3. The cutting machine (1) according to claim 1 or 2, wherein
the first blow passage (40A, 40B) and the second blow passage (50A, 50B) are formed branching from a downwind side of the cooling fan (F).

4. The cutting machine (1) according to any one of claims 1 to 3, wherein
an air outlet (12A, 12B) from which the cooling air blows is formed on each of left and right side surfaces of the housing (10) on the downwind side of the cooling fan (F), and the first blow passage (40A, 40B) and the second blow passage (50A, 50B) are formed branching from the air outlet (12A, 12B) on each of the left and right side surfaces.

5. The cutting machine (1) according to claim 4, wherein
the first blow passage (40A, 40B) and the second blow passage (50A, 50B) are each formed as a recessed groove.

6. The cutting machine (1) according to claim 4 or 5, wherein
an upstream end of the first blow passage (40A, 40B) communicates with the air outlet (12A, 12B), and a downstream end of the first blow passage (40A, 40B) is connected to a front surface of the housing (10) and opens toward the rod (20).

7. The cutting machine (1) according to claim 4 or 5, wherein
an upstream end of the second blow passage (50A, 50B) communicates with the air outlet (12A, 12B), and a downstream end of the second blow passage (50A, 50B) is connected to a bottom surface of the housing (10) and opens toward the cutting region (P2).

8. The cutting machine (1) according to any one of claims 1 to 7, wherein
with the cover member (60) attached to the lower portion of the housing (10), a front end edge of the cover member (60) is formed with a left wall portion (60A) that is continuous from a left side surface of the cover member (60) and projects toward a left side of the rod (20), and formed with a right wall portion (60B) that is continuous from a right side surface of the cover member (60) and projects toward a right side of the rod (20).

9. The cutting machine (1) according to any one of claims 1 to 8, wherein
a base (61) that projects downward and contacts an upper surface of the workpiece (W) is provided continuous from the cover member (60).

10. The cutting machine (1) according to any one of claims 1 to 9, wherein the lower end of the rod (20) is connected through a connecting body (21) to the cutting blade, and cooling air generated by the cooling fan (F) flows through the first blow passage (40A, 40B) toward the connecting body (21) at a top dead center position (P1).

11. The cutting machine (1) according to claim 10, wherein
an air outlet (12A, 12B) from which the cooling air blows is formed on each of left and right side surfaces of the housing (10) on a downwind side of the cooling fan (F), and the first blow passage (40A, 40B) is formed as a recessed groove on each of the left and right side surfaces, wherein an upstream end of the first blow passage (40A, 40B) communicates with the air outlet (12A, 12B), and a downstream end of the first blow passage (40A, 40B) is connected to a front surface of the housing (10) and opens toward the connecting body (21).

12. A cutting machine (1), in which a reciprocating rod (20) is driven by a motor (M) and projects downward at a forward portion of a housing (10) that accommodates the motor (M) and a cooling fan (F) for cooling the motor (M), and a lower end of the rod (20) is connected through a connecting body (21) to a cutting blade (30) for cutting a workpiece (W), wherein a blow passage (40A, 40B) is formed in the housing (10),
wherein
cooling air generated by the cooling fan (F) flows through the blow passage (40A, 40B) toward the connecting body (21) at a top dead center position (P1), and
a downstream end of the blow passage (40A, 40B) is connected to a front surface of the housing (10) and opens toward the connecting body (21),
**characterized in that**
an air outlet (12A, 12B) from which the cooling air blows is formed on each of left and right side surfaces of the housing (10) on a downwind side of the cooling fan (F), and
the blow passage (40A, 40B) is formed as a recessed groove on each of said left and right side surfaces, wherein an upstream end of the blow passage (40A, 40B) communicates with the air outlet (12A, 12B).

## Patentansprüche

1. Schneidemaschine (1), bei welcher ein hin- und hergehender Stab (20) durch einen Motor (M) angetrieben wird und nach unten an einem vorderseitigen Teil eines Gehäuses (10) vorsteht, das den Motor (M) und ein Kühlungslüfterrad (F) zum Kühlen des Motors (M) aufnimmt, und ein unteres Ende des Stabes mit einem Schneideblatt (30) zum Schneiden eines Werkstückes (W) verbunden ist, bei der
das Gehäuse (10) mit einer ersten Strömungspassage (40) ausgebildet ist und Kühlungsluft, die durch das Kühlungslüfterrad (F) erzeugt wird, nach vorne durch die erste Strömungspassage in einer Richtung strömt, die den Stab (20) von einer hinteren Seite relativ zu dem Stab (20) kreuzt, und
eine zweite Strömungspassage (50A, 50B) vorgesehen ist und die Kühlungsluft durch die zweite Strömungspassage (50A, 50B) in Richtung eines Schneidebereiches (P2) des Werkstückes (W), das durch das Schneideblatt (30) geschnitten wird, strömt,
**dadurch gekennzeichnet, dass**
die Schneidemaschine (1) weiter ein Abdeckungsbauteil (60) aufweist, das an einem unteren Teil des Gehäuses (10) angebracht ist und von der ersten Strömungspassage (40A, 40B) und von der zweiten Strömungspassage (50A, 50B) zu dem vorderseitigen Teil des Gehäuses (10) abdeckt, bei der
zwischen einer äußeren Oberfläche des Gehäuses (10) und einer inneren Oberfläche des Abdeckungsbauteils (60) die Kühlungsluft, die aus der ersten Strömungspassage (40A, 40B) strömt, in Richtung des Stabes (20) gelenkt wird, und die Kühlungsluft, die aus der zweiten Strömungspassage (50A, 50B) strömt, in Richtung des Schneidebereiches (P2) gelenkt wird.

2. Schneidemaschine (1) nach Anspruch 1, bei der
ein Paar von der ersten Strömungspassage (40A, 40B) in dem Gehäuse (10) vorgesehen ist und die Kühlungsluft durch die ersten Strömungspassagen (40A, 40B) nach links und nach rechts an der hinteren Seite des Stabes (20) strömt.

3. Schneidemaschine (1) nach Anspruch 1 oder 2, bei der
die erste Strömungspassage (40A, 40B) und die zweite Strömungspassage (50A, 50B) ausgebildet sind, dass sie von einer stromabwärtigen Seite des Kühlungslüfterrades (F) verzweigen.

4. Schneidemaschine (1) nach einem der Ansprüche 1 bis 3, bei der
ein Luftauslass (12A, 12B), aus welchem die Kühlungsluft strömt, an jeder von einer linken und einer rechten Seitenoberfläche des Gehäuses (10) an der stromabwärtigen Seite des Kühlungslüfterrades (F) ausgebildet ist, und die erste Strömungspassage (40A, 40B) und die zweite Strömungspassage (50A, 50B) so ausgebildet sind, dass sie von dem Luftauslass (12A, 12B) an jeder von der linken und der rechten Seitenoberfläche verzweigen.

5. Schneidemaschine (1) nach Anspruch 4, bei der
die erste Strömungspassage (40A, 40B) und die zweite Strömungspassage (50A, 50B) jeweils als eine ausgenommene Nut ausgebildet sind.

6. Schneidemaschine (1) nach Anspruch 4 oder 5, bei der
ein stromaufwärtiges Ende der ersten Strömungspassage (40A, 40B) mit dem Luftauslass (12A, 12B) in Verbindung steht, und ein stromabwärtiges Ende der ersten Strömungspassage (40A, 40B) mit einer vorderen Oberfläche des Gehäuses (10) verbunden ist und in Richtung des Stabes (20) öffnet.

7. Schneidemaschine (1) nach Anspruch 4 oder 5, bei der
ein stromaufwärtiges Ende der zweiten Strömungspassage (50A, 50B) mit dem Luftauslass (12A, 12B) in Verbindung steht, und ein stromabwärtiges Ende der zweiten Strömungspassage (50A, 50B) mit einer Bodenoberfläche des Gehäuses (10) verbunden ist und in Richtung des Schneidebereiches (P2) öffnet.

8. Schneidemaschine (1) nach einem der Ansprüche 1 bis 7, bei der
mit dem Abdeckungsbauteil (60) an dem unteren Teil des Gehäuses (10) angebracht eine vordere Endkante des Abdeckungsbauteils (60) mit einem linken Wandteil (60A) ausgebildet ist, der kontinuierlich mit einer linken Seitenoberfläche des Abdeckungsbauteils (60) ist und in Richtung einer linken Seite des Stabes (20) vorsteht, und mit einem rechten Wandteil (60B) ausgebildet ist, der kontinuierlich mit einer rechten Seitenoberfläche des Abdeckungsbauteils (60) ist und in Richtung einer rechten Seite des Stabes (20) vorsteht.

9. Schneidemaschine (1) nach einem der Ansprüche 1 bis 8, bei der
eine Basis (61), die nach unten vorsteht und eine Oberfläche des Werkstückes berührt, kontinuierlich mit dem Abdeckungsbauteil (60) vorgesehen ist.

10. Schneidemaschine (1) nach einem der Ansprüche 1 bis 9, bei der
das untere Ende des Stabes (20) durch einen Verbindungskörper (21) mit dem Schneideblatt verbunden ist und Kühlungsluft, die durch das Kühlungslüfterrad (F) erzeugt wird, durch die erste Strömungspassage (40A, 40B) in Richtung des Verbindungskörpers (21), der in einer oberen Totpunktposition (P1) ist, strömt.

11. Schneidemaschine (1) nach Anspruch 10, bei der
ein Luftauslass (12A, 12B), aus welchem die Kühlungsluft strömt, an jeder von einer linken und einer rechten Seitenoberfläche des Gehäuses (10) an einer stromabwärtigen Seite des Kühlungslüfterrades (F) ausgebildet ist, und die erste Strömungspassage (40A, 40B) als eine ausgenommene Nut an jeder von der linken und der rechten Seitenoberfläche ausgebildet ist, bei der ein stromaufwärtiges Ende der ersten Strömungspassage (40A, 40B) mit dem Luftauslass (12A, 12B) in Verbindung steht und ein stromabwärtiges Ende der ersten Strömungspassage (40A, 40B) mit einer vorderen Oberfläche des Gehäuses (10) verbunden ist und in Richtung des Verbindungskörpers (21) öffnet.

12. Schneidemaschine (1), bei welcher ein hin- und hergehender Stab (20) durch einen Motor (M) angetrieben wird und nach unten an einem vorderseitigen Teil eines Gehäuses (10) vorsteht, das den Motor (M) und ein Kühlungslüfterrad (F) zum Kühlen des Motors (M) aufnimmt, und ein unteres Ende des Stabes (20) durch einen Verbindungskörper (21) mit einem Schneideblatt (30) zum Schneiden eines Werkstückes (W) verbunden ist, bei der eine Strömungspassage (40A, 40B) in dem Gehäuse (10) ausgebildet ist,
bei der
Kühlungsluft, die durch das Kühlungslüfterrad (F) erzeugt wird, durch die Strömungspassage (40A, 40B) in Richtung des Verbindungskörpers (21), der in einer oberen Totpunktposition (P1) ist, strömt, und
ein stromabwärtiges Ende der Strömungspassage (40A, 40B) mit einer vorderen Oberfläche des Gehäuses (10) verbunden ist und in Richtung des Verbindungskörpers (21) öffnet,
**dadurch gekennzeichnet, dass**
ein Luftauslass (12A, 12B), aus welchem die Kühlungsluft strömt, an jeder von einer linken und einer rechten Seitenoberfläche des Gehäuses (10) an einer stromabwärtigen Seite des Kühlungslüfterrades (F) ausgebildet ist, und
die Strömungspassage (40A, 40B) als eine ausgenommene Nut an jeder von der linken und der rechten Seitenoberfläche ausgebildet ist, wobei ein stromaufwärtiges Ende der Strömungspassage (40A, 40B) mit dem Luftauslass (12A, 12B) in Verbindung steht.

## Revendications

1. Machine à découper (1), dans laquelle une tige à mouvement alternatif (20) est entraînée par un moteur (M) et fait saillie vers le bas au niveau d'une partie avant d'un logement (10) qui loge le moteur (M) et une soufflante de refroidissement (F) pour refroidir le moteur (M) et une extrémité inférieure de la tige (20) est reliée à une lame de découpe (30) pour découper une pièce (W), la machine à découper (1), dans laquelle le logement (10) est formé avec un premier passage de soufflage (40) et de l'air de refroidissement généré par la soufflante de refroidissement (F) s'écoule vers l'avant à travers le premier passage de soufflage dans une direction croisant la tige (20) depuis un côté arrière par rapport à la tige (20), et
un second passage de soufflage (50A, 50B) est prévu et l'air de refroidissement s'écoule à travers le second passage de soufflage (50A, 50B) vers une région de découpe (P2) de la pièce (W) en train d'être découpée par la lame de découpe (30),
**caractérisée en ce que**
la machine à découper (1) comprend en outre un élément de protection (60) qui est fixé à une partie inférieure du logement (10) et protège depuis le premier passage de soufflage (40A, 40B) et le second passage de soufflage (50A, 50B) vers la partie avant du logement (10), dans laquelle
entre une surface extérieure du logement (10) et une surface intérieure de l'élément de protection (60), l'air de refroidissement soufflé depuis le premier passage de soufflage (40A, 40B) est guidé vers la tige (20) et l'air de refroidissement soufflé depuis le second passage de soufflage (50A, 50B) est guidé vers la région de découpe (P2).

2. Machine à découper (1) selon la revendication 1, dans laquelle
une paire des premiers passages de soufflage (40A, 40B) est prévue dans le logement (10) et l'air de refroidissement s'écoule à travers les premiers passages de soufflage (40A, 40B) vers la gauche et vers la droite depuis le côté arrière de la tige (20).

3. Machine à découper (1) selon la revendication 1 ou 2, dans laquelle
le premier passage de soufflage (40A, 40B) et le second passage de soufflage (50A, 50B) sont formés par bifurcation depuis un côté sous le vent de la soufflante de refroidissement (F).

4. Machine à découper (1) selon l'une quelconque des revendications 1 à 3, dans laquelle un orifice de sortie d'air (12A, 12B) depuis lequel l'air de refroidissement souffle est formé sur chacune des surfaces latérales gauche et droite du logement (10) sur le côté sous le vent de la soufflante de refroidissement (F) et le premier passage de soufflage (40A, 40B) et le second passage de soufflage (50A, 50B) sont formés par bifurcation depuis l'orifice de sortie d'air (12A, 12B) sur chacune des surfaces latérales gauche et droite.

5. Machine à découper (1) selon la revendication 4, dans laquelle
le premier passage de soufflage (40A, 40B) et le second passage de soufflage (50A, 50B) ont chacun la forme d'une rainure évidée.

6. Machine à découper (1) selon la revendication 4 ou 5, dans laquelle
une extrémité amont du premier passage de soufflage (40A, 40B) communique avec l'orifice de sortie d'air (12A, 12B) et une extrémité aval du premier passage de soufflage (40A, 40B) est raccordée à une surface avant du logement (10) et s'ouvre vers la tige (20).

7. Machine à découper (1) selon la revendication 4 ou 5, dans laquelle
une extrémité amont du second passage de soufflage (50A, 50B) communique avec l'orifice de sortie d'air (12A, 12B) et une extrémité aval du second passage de soufflage (50A, 50B) est raccordée à une surface inférieure du logement (10) et s'ouvre vers la région de découpe (P2).

8. Machine à découper (1) selon l'une quelconque des revendications 1 à 7, dans laquelle
avec l'élément de protection (60) fixé à la partie inférieure du logement (10), un bord d'extrémité avant de l'élément de protection (60) est formé avec une partie paroi gauche (60A) qui est continue depuis une surface latérale gauche de l'élément de protection (60) et fait saillie vers un côté gauche de la tige (20) et est formé avec une partie de paroi droite (60B) qui est continue depuis une surface latérale droite de l'élément de protection (60) et fait saillie vers un côté droit de la tige (20).

9. Machine à découper (1) selon l'une quelconque des revendications 1 à 8, dans laquelle une base (61) qui fait saillie vers le bas et est en contact avec une surface supérieure de la pièce (W) est disposée de façon continue depuis l'élément de protection (60).

10. Machine à découper (1) selon l'une quelconque des revendications 1 à 9, dans laquelle l'extrémité inférieure de la tige (20) est raccordée par l'intermédiaire d'un corps de raccordement (21) à la lame de découpe, et l'air de refroidissement généré par la soufflante de refroidissement (F) s'écoule à travers le premier passage de soufflage (40A, 40B) vers le corps de raccordement (21) au niveau d'une position au point mort haut (P1).

11. Machine à découper (1) selon la revendication 10, dans laquelle un orifice de sortie d'air (12A, 12B) depuis lequel l'air de refroidissement souffle est formé sur chacune des surfaces latérales gauche et droite du logement (10) sur un côté sous le vent de la soufflante de refroidissement (F) et le premier passage de soufflage (40A, 40B) a la forme d'une rainure évidée sur chacune des surfaces latérales gauche et droite, dans laquelle une extrémité amont du premier passage de soufflage (40A, 40B) communique avec l'orifice de sortie d'air (12A, 12B), et une extrémité aval du premier passage de soufflage (40A, 40B) est raccordée à une surface avant du logement (10) et s'ouvre vers le corps de raccordement (21).

12. Machine à découper (1), dans laquelle une tige à mouvement alternatif (20) est entraînée par un moteur (M) et fait saillie vers le bas au niveau d'une partie avant d'un logement (10) qui loge le moteur (M) et une soufflante de refroidissement (F) pour refroidir le moteur (M) et une extrémité inférieure de la tige (20) est raccordée par l'intermédiaire d'un corps de raccordement (21) à une lame de découpe (30) pour découper une pièce (W), dans laquelle un passage de soufflage (40A, 40B) est formé dans le logement (10),
dans laquelle
l'air de refroidissement généré par la soufflante de refroidissement (F) s'écoule à travers le passage de soufflage (40A, 40B) vers le corps de raccordement (21) au niveau d'une position au point mort haut (P1), et
une extrémité aval du passage de soufflage (40A, 40B) est raccordée à une surface avant du logement (10) et s'ouvre vers le corps de raccordement (21),
**caractérisée en ce que**
un orifice de sortie d'air (12A, 12B) depuis lequel l'air de refroidissement souffle est formé sur chacune des surfaces latérales gauche et droite du logement (10) sur un côté sous le vent de la soufflante de refroidissement (F) et
le passage de soufflage (40A, 40B) a la forme d'une rainure évidée sur chacune desdites surfaces latérales gauche et droite, dans laquelle une extrémité amont du passage de soufflage (40A, 40B) communique avec l'orifice de sortie d'air (12A, 12B).
